**Europäisches Patentamt**

**European Patent Office**

**Office européen des brevets**

(19)

(11) Veröffentlichungsnummer: **0 104 336**
**B1**

# (12) EUROPÄISCHE PATENTSCHRIFT

(45) Veröffentlichungstag der Patentschrift:
**18.03.87**

(21) Anmeldenummer: **83106899.4**

(22) Anmeldetag: **14.07.83**

(51) Int. Cl.⁴: **G 01 K 7/06**

(54) **Thermoelement aus dem Thermopaar Graphit/Borcarbid.**

(30) Priorität: **28.09.82 DE 3235838**

(43) Veröffentlichungstag der Anmeldung:
**04.04.84 Patentblatt 84/14**

(45) Bekanntmachung des Hinweises auf die Patenterteilung:
**18.03.87 Patentblatt 87/12**

(84) Benannte Vertragsstaaten:
**AT BE CH DE FR GB IT LI NL SE**

(56) Entgegenhaltungen:
**EP-A-0 002 067**
**DE-A-2 629 960**
**DE-C-714 607**
**US-A-2 152 153**

(73) Patentinhaber: **Elektroschmelzwerk Kempten GmbH, Herzog- Wilhelm- Strasse 16, D-8000 München 2 (DE)**

(72) Erfinder: **Hunold, Klaus, Dr. Dipl.- Ing., Hirschdorfer Weg 3, D-8960 Kempten (DE)**
Erfinder: **Lipp, Alfred, Dr. Dipl.- Chem., Bürgermeister- Singer- Strasse 15, D-8939 Bad Wörishofen (DE)**
Erfinder: **Reinmuth, Klaus, Dr. Dipl.- Chem., An der Halde 21, D-8968 Durach (DE)**
Erfinder: **Arnold, Peter, Ahornstrasse 10, D-8961 Sulzberg (DE)**

## Beschreibung

Für die Hochtemperaturessung mittels Thermoelementen finden in der Großtechnik praktisch ausschließlich solche aus metallischen Thermopaaren Verwendung, deren Schenkel üblicherweise als Drähte ausgebildet und an einem Ende leitend verbunden sind. Beispiele hierfür sind insbesondere Wolfram/Rhenium und Iridium/Rhenium - Legierungen, mit denen Temperaturen bis 2.400°C gemessen werden können (vgl. "Ullmanns Enzyklopädie der technischen Chemie", 4. Auflage, Band 5, Seite 814 (1980)).

Diese Thermoelemente aus metallischen Thermopaaren können für die Hochtemperaturmessungen in inerten Gasen, im Vakuum sowie in reduzierender Atmosphäre eingesetzt werden. Zum Schutz gegen Beschädigungen und/oder der Einwirkung von aggresiven Medien müssen sie jedoch mit einem Schutzrohr versehen werden und die Thermodrähte müssen gegeneinander, sowie gegen das Schutzrohr elektrisch isoliert werden, wobei als Elektroisolationsstoffe nur solche in Betracht kommen, die auch bei den hohen Temperaturen einen ausreichend großen elektrischen Widerstand haben, wie Thoriumoxid, Magnesiumoxid, Aluminiumoxid, Berylliumoxid und Bornitrid. Darüberhinaus sind für alle Thermopaare aus Metall Temperaturen im Bereich von 1.800° bis 2.000°C Grenztemperaturen, worunter zu verstehen ist, daß ihre Temperaturanzeige nur bis zu diesem Bereich stabil ist, da bei höheren Temperaturen aufgrund von Rekristallisation und Versprödung Veränderungen ihres physikalischen Zustandes auftreten, die eine Änderung der Thermospannung zur Folge haben und damit eine Instabilität in der Temperaturanzeige.

Aufgrund dieser bekannten Nachteile der metallischen Thermopaare, die sich insbesondere bei der Hochtemperaturmessung störend bemerkbar machen, wurden daher bereits Thermopaare aus nicht metallischen Werkstoffen entwickelt. Diese sind einfach anfgebaut, da eine elektrische Isolierung der Thermopaarschenkel durch keramische Werkstoffe nicht unbeding erforderlich ist und häufig kein Schutzrohr benötigt wird. Hinsichtlich ihrer mechanischen und thermoelektrischen Eigenschaften sind sie jedoch im allgemeinen denjenigen aus Metallen unterlegen. Für die Hochtemperaturmessung im Bereich von 2.000°C bis 2.500°C werden beispielsweise Thermopaare mit einem Graphitschenkel als geeignet beschrieben, wie aus C/C, wobei die beiden Schenkel aus Graphitsorten mit unterschiedlichen elektrischen Eigenschaften bestehen, aus C/TiC, C/NbC und $C/ZrB_2$, sowie aus $C/B_4C$, das seit langem bekannt ist, aber bisher in der Industrie nicht verwendet wurde (vgl. "Nichtmetallene Thermopaare und Schutzrohre", Teil 1 und 2 von G.W. Samsonow und P.S. Kislyj, abgedruckt in VDI (Ver. Deut. Ing.) Z. 1969, 111 (19), Seite 1337-42; (24) Seite 1706-12; ref. in C.A. Vol. 73 (1970), Nr.101673j).

Es wurde jedoch festgestellt, daß ein handelsübliches Thermoelement aus dem Thermopaar reiner Graphit/borierter Graphit mit einem Boranteil von ca. 1 Gew.-%, das bei 2.000°C eine Thermospannung von 100 mV hat, bei der Langzeitanwendung in diesem hohen Temperaturbereich eine deutliche Änderung der Thermospannung zeigt, was vermutlich auf eine Diffusion des Bors an der heißen Verbindungsstelle zurückzuführen ist. Dieses Thermoelement ist somit im Hochtemperaturbereich mit der gleichen Instabilität in der Temperaturanzeige behaftet, wie die bekannten Thermoelemente aus metallischen Thermopaaren.

Bei dem in der US-PS 2 152 153 beschriebenen Thermoelement aus dem Thermopaar Graphit/Borcarbid, das bei 2.000°C eine Thermospannung von 600 mV hat, ist hingegen eine Änderung der Thermospannung aufgrund von Stoffaustausch an der heißen Verbindungsstelle nicht zu erwarten, da Borcarbid mit Graphit auch bei hohen Temperaturen nicht reagiert. Obwohl demnach seit mehr als 40 Jahren bekannt ist, daß das Thermopaar $C/B_4C$ aufgrund seiner hohen Thermospannung und seiner Beständigkeit bei hohen Temperaturen als Thermoelement für die Hochtemperaturmessung gut geeignet wäre, hat offensichtlich der komplizierte Aufbau desselben und die damit verbundenen Nachteile bisher seine Verwendung in der Großtechik verhindert.

Gemäß der genannten US-PS sind die Schenkel des Thermopaares als Rohr und als innerhalb dieses Rohres konzentrisch angeordneter Stab ausgebildet und an einem Ende leitend verbunden, wobei vorteilhaft das Rohr aus Graphit und der Stab aus Borcarbid besteht. Stäbe aus reinem Borcarbid mit ausreichender mechanischer Festigkeit können durch Heißpressen nach dem in der US-PS 1 897 214 beschriebenen Verfahren hergestellt werden. Die Formgebungsmöglichkeiten beim Heißpressen sind jedoch begrenzt, sodaß hiermit nur relativ kurze Stäbe erhalten werden können. Für den Aufbau des Thermoelements gemäß der US-PS 2 152 153 sind daher aufwendige Kühlvorrichtungen, sowohl für das Graphitrohr, als auch für dem Borcarbidstab vorgesehen, um eine ausreichende Temperaturdifferenz zwischen der heißen Verbindungsstelle (Meßstelle) und der noch im heißen Bereich liegenden Vergleichsstelle zu erzielen. Eine größere Entfernung zwischen Meß- und Vergleichsstelle kann auch nicht durch sogenannte "Ausgleichsleitungen" erreicht werden, die üblicherweise für Thermoelemente aus metallischen Thermopaaren verwendet werden, da bisher kein Material bekannt ist, das im Temperaturbereich von 0°C bis 200°C die gleiche Thermospannung erzeugt, wie das $C/B_4C$-Thermopaar selbst. Durch diese im heißen Bereich liegende Vergleichsstelle ist aber die Meßgenauigkeit des Thermoelements nicht hinreichend garantiert.

Darüberhinaus ist es aufgrund seiner begrenzten Länge für große Öfen, deren Temperatur im Inneren des Ofenraums gemessen werden muß, nicht brauchbar.

Es stellt sich somit die Aufgabe, ein verbessertes Thermoelement bestehend aus dem Thermopaar Graphit/Borcarbid, dessen Schenkel als Rohr und als innerhalb dieses Rohrs konzentrisch angeordneter Stab ausgebildet und an einem Ende leitend verbunden sind, zur Verfügung zu stellen, bei dem Meß- und Vergleichsstelle so weit voneinander entfernt angeordnet sind, daß die Vergleichsstelle nicht mehr im heißen Bereich liegt und aufwendige Kühlvorrichtunen entfallen.

Diese Aufgabe wird erfindungsgemäß dadurch gelöst, daß als Werkstoff für einen der Thermopaarschenkel polykristallines Borcarbid mit Eigenbindung, das durch druckloses Sintern hergestellt worden ist, verwendet wird.

Bei drucklosen Sinterverfahren sind die Formgebungsmöglichkeiten nicht wie beim Heißpressen begrenzt, sodaß hiermit sowohl Stäbe, als auch Rohre aus Borcarbid von beliebiger Länge hergestellt werden könnem. Der Aufbau des Thermoelements wird entscheidend vereinfacht, da nicht mehr einer der Thermopaarschenkel von der Herstellung her in seiner Länge begrenzt ist. Durch den Einsatz von Stäben oder Rohren von beliebiger Länge können nicht nur Meß- und Vergleichsstelle so weit voneinander entfernt angeordnet werden, daß letztere mit Sicherheit im kalten Bereich liegt, was der Verbesserung der Meßgenauigkeit dient, sondern es sind auch keine aufwendigen Kühlvorrichtungen mehr erforderlich. Darüberhinaus kann die Länge des gesamten Thermoelements jedem gewünschten Verwendungszweck angepaßt werden, so daß diese beispielsweise auch für die Temperaturmessung in großen Öfen eingesetzt werden können.

Von den für Borcarbid bekannten drucklosen Sinterverfahren sind selbstverständlich nur solche brauchbar, die die Herstellung von Stäben oder Rohren aus defitionsgemäß polykristallinem Borcarbid mit Eigenbindung ermöglichen, worunter zu verstehen ist, daß diese praktisch ausschließlich aus Bor und Kohlenstoff bestehen, da außer den bereits in den pulverförmigen Ausgangsmaterialien vorhandenen Bor- und C-Atomen keine fremden Elemente oder Verbindungen eingeführt werden, die zu fremdgebundenen Sinterkörpern führen.

Die für die Thermoelemente erforderlichen Rohre oder Stäbe aus Borcarbid können beispielsweise nach dem in der Europäischen PS 2 067 (die der US-PS 4 195 066 entspricht) beschriebenen Verfahren aus Borcarbidpulver mit Submikronfeinheit und einem Kohlenstoff enthaltenden Zusatz durch drucklose Sinterung hergestellt werden. Die so erhaltenen Rohre oder Stäbe, die aus reinem $B_4C$ der stöchiometrischen

Zusammensetzung oder aus graphithaltigem $B_4C$ mit einem überschüssigen C-Gehalt bis zu 0,8 Gew.-% bestehen, haben eine Dichte von mindestens 90 % der theoretischen Dichte von reinem $B_4C$ (im folgenden als % TD abgekürzt) und eine Biegebruchfestigkeit von > 300 N/mm², die als Maß für die mechanische Festigkeit dient.

Es ist jedoch nicht unbedingt erforderlich, daß die Stäbe oder Rohre aus Borcarbid eine so hohe Dichte und mechanische Festigkeit haben. Entscheidend ist vielmehr, daß sie in beliebiger Länge praktisch textur- und lunkerfrei hergestellt werden können, das heißt eine möglichst gleichmäßige Kornstruktur aufweisen und somit praktisch spannugsfrei sind.

· Besonders bewährt hat sich hierbei das in der DE-PS (P 31 49 796.9, eingereicht am 16.12.1981) beschriebene Verfahren, bei dem Borcarbidpulver mit bimodaler Kornverteilung aus einem Grobkorn- und einem Feinkornanteil ohne Mitverwendung von Sinterhilfsmitteln unter Bildung von Grünkörpern vorverdichtet und anschließend bei Temperaturen von mindestens 1.900° C in Gegenwart einer Schutzgasatmosphäre drucklos gesintert werden. Die so erhaltenen Rohre oder Stäbe, die aus $B_4C$ mit relativ grobkörnigem Gefüge bestehen, sind porös mit gleichmäßiger Korn- und Porenverteilung. Ihre Dichte ist durch die Dichte des Grünkörpers festgelegt, da während des Sintervorgangs praktisch keine oder nur eine sehr geringe Schwindung eintritt und sie haben eine Biegebruchfestigkeit von etwa 100 bis 200 N/mm2.

Für den Aufbau des Thermoelements können vorgefertigte Teile verwendet werden. Da spannungsfreie Stäbe aus drucklos gesintertem Borcarbid leichter herstellbar sind als Rohre und Borcarbid aufgrund seiner Härte schwieriger zu bearbeiten ist, werden hierbei aus wirtschaftlichen Gründen vorteilhaft Graphitrohre und Borcarbidstäbe verwendet, die an einem Ende durch ein Teilstück aus Graphit leitend verbunden sind.

Als Werkstoffe für die Rohre und Teilstücke können handelsübliche Produkte aus Elektrographit verwendet werden. Bei nicht ausreichender Lange können gegebenenfalls mehrere Graphitrohre über ein Verbindungsteilstück aus Graphit aneinander gesetzt werden.

Als Werkstoff für die Stäbe wird vorteilhaft Borcarbid mit grobkörnigem Gefüge verwendet. Derartige Stäbe können beispielsweise in enger Anlehnung an das in der oben genannten DE-PS (P 31 49 769.9) beschriebene Verfahren wie folgt hergestellt werden:

Borcarbidpulver mit bimodaler Kornverteilung werden zusammen mit etwa 1 bis 2 Gew.-% eines temporären Bindemittels auf Basis wasserlöslicher Celluloseether, wie hochviskose Methylcellulose und Wasser unter Bildung einer homogenen Masse von pastenähnlicher Konsistenz vermischt und durch Strangpressen kontinuierlich zu Stäben geformt, die auf Graphitunterlagen aufgenommen und nach dem Trocknen kontinuierlich bei 2.000 bis 2.250°C gesintert werden, indem sie unter Schutzgasspülung kontinuierlich durch die feststehende Heizzone in einem Durchschubsinterofen geschoben werden. Die Länge der so erhaltenen Stäbe ist dabei nur durch die Handhabungsmöglichkeiten begrenzt, die in Abhängigkeit von der Dicke bis zu mehreren Metern betragen kann. Sie haben ein grobkörniges Gefüge, da der Feinkornanteil nach dem Sintern verschwunden ist und eine Dichte von etwa 60 bis 80 % TD.

Als Abstandshalter werden vorteilhaft vorgefertigte Hülsen aus hexagonalem Bornitrid verwendet.

Anstelle des Aufbaus aus vorgefertigten Teilen kan das gesamte Thermoelement, bestehend aus Stab, Abstandshalter und Rohr jedoch auch in einem Arbeitsgang durch drucklose Sinterung des Borcarbidpulvers in situ hergestellt werden. Wenn als Ausgangsmaterial für den Abstandshalter hochreines, boroxidfreies hexagonales Bornitridpulver verwendet wird, kann dieses gemeinsam mit dem Borcarbidpulver in situ drucklos gesintert werden.

Ein derartiges Thermoelement besteht vorteilhaft aus einer flexiblen Graphitschnur für den als Stab ausgebildeten Thermopaarschenkel, einer Hülle aus Bornitrid und einem Mantel aus Borcarbid mit grobkörnigem Gefüge und einer Dichte von 60 bis 80% der theoretischen Dichte von reinem Borcarbid, der an einem Ende mit der Graphitschnur leitend verbunden ist, wobei Hülle und Mantel gemeinsam in situ drucklos gesintert worden sind.

Für die Herstellung dieses Thermoelements hat sich das folgende Verfahren besonders bewährt:

Auf eine handelsübliche, flexible Graphitschnur von etwa 1 bis 2 mm Dicke wird konzentrisch eine Bornitridpulverschicht und darauf eine Borcarbidpulverschicht mit bimodaler Kornverteilung durch Strangpressen aufgebracht. Für das Aufbringen wird eine Strangpresse verwendet, die in zwei Kammern unterteilt ist, welche konzentrisch um ein Innenrohr angeordnet sind. Durch das Innenrohr wird die Graphitschnur kontinuierlich bewegt unter gleichzeitigem Aufpressen der beiden Schichten. Bei ausreichender Länge wird der beschichtete Strang abgeschnitten, die Graphitschnur an einem Ende freigelegt und direkt mit dem Borcarbidpulver in Berührung gebracht, beispielsweise durch Aufbringen der Borcarbidpulvermasse von Hand. Diese Anordnung wird auf Graphitunterlagen aufgenommen, getrocknet und anschließend drucklos auf 2 000° bis 2 250°C erhitzt, wobei die aufgetragenen Schichten durch Sinterung die Hülle aus Bornitrid und den Mantel aus Borcarbid bilden.

Eine erste Ausführungsform für den Aufbau eines Thermoelements aus vorgefertigten Teilen gemäß der Erfindung wird in den Figuren 1 bis 4 dargestellt, worin

Fig. 1 schematisch die Gesamtansicht,
Fig. 2 einen Längsschnitt im Bereich II der Fig. 1,
Fig. 3 einen Längsschnitt im Bereich III der Fig. 1 und
Fig. 4 einen Längsschnitt im Bereich IV der Fig. 1 zeigt.

Hierin bedeuten 1 einen Borcarbidstab von beliebiger Länge, der an Stabende 2 in einem elektrisch leitenden Verbindugsstück aus Graphit 3 durch Einklemmen befestigt ist und 4 Graphitrohre, die durch Graphitmuffen 5 miteinander, bzw. mit 3 durch Verschrauben verbunden sind. Zwischen den Graphitrohren 4 und dem Borcerbidstab 1 sind Abstandshalter 6 aus elektrisch isolierendem Material angeordnet, die vorteilhaft als Hülsen ausgebildet sind, die den Borcarbidstab 1 entweder über die ganze Stablänge oder nur in bestimmten Abständen umhüllen und jeweils in den Graphitrohren 4 verankert sind. Der Borcarbidstab 1 ist am Stabende 7 und das Graphitrohr 4 am Rohrende 8 jeweils mit Kupferdrähten 9 und 10 verbunden, von welchen die Spannung über einen Spannungsmesser abgenommen werden kann.

Als Abstandshalter 6 werden vorteilhaft vorgefertigte Hülsen aus hochreinem, boroxidfreiem, hexagonalem Bornitrid verwendet, die wegen ihrer guten Gleiteigenschaften dem Borcarbidstab 1 praktisch keinen Gleitwiderstand entgegensetzen, wenn sich dieser gegenüber dem Graphitrohr 4 aufgrund der unterschiedlichen thermischen Längenausdehnung verschiebt. Der Borcarbidstab 1 ist nur am Stabende 2 fest eingespannt und kann sich somit in Richtung auf die Vergleichsstelle frei bewegen. Zur Sicherstellung der freien Bewegungsmöglichkeit des Borcarbidstabes 1 wird bei Einsatz des Thermoelements im Ofenbetrieb nur das Graphitrohr 4 durch eine Haltevorrichtung befestigt, beispielsweise an der Stelle der Ofendurchführung oder am Rohrende 8.

Eine besonders bevorzugte Ausführungsform für den Aufbau eines Thermoelements gemäß der Erfindung das in einem Arbeitsgang durch drucklose Sinterung des Borcarbidpulvers in situ hergestellt worden ist, wird in den Figuren 5 - 7 dargestellt, worin

Figur 5 schematisch den Gesamt-Längsschnitt
Figur 6 einen Längsschnitt im Bereich VI der Figur 5 und
Figur 7 einen Längsschnitt im Bereich VII der Figur 5 zeigt.

Hierin bedeuten 1 die Graphitschnur von beliebiger Länge, die an ihrem einen Ende 2 mit der äußeren Borcarbidschicht 4 leitend verbunden ist (Fig. 6). Zwischen der Graphitschnur 1 und der äußeren Borcarbidschicht 4 befindet sich eine durchgehende Isolationsschicht aus Bornitrid 6. Die Graphitschnur 1 ist an ihrem Ende 7 und die Borcarbidschicht 4 an ihrem Ende 8 jeweils mit Kupferdrähten 9 und 10 verbunden, von welchen die Spannung über einen Spannungsmesser abgenommen werden kann (Fig. 7).

Die Befestigung des Kupferdrahtes 9 am Ende 7 der Graphitschnur 1 wird vorteilhaft über eine Klemmschraube 11 vorgenommen.

Die Thermoelemente gemäß der Erfindung können für die Hochtemperaturmessung bis zu 2.400° C in Öfen mit nicht oxidierender Atmosphäre eingesetzt werden, wobei die Ofengröße keine Rolle spielt.

In Öfen, die unter Normaldruck oder vermindertem Druck in Gegenwart einer reduzierenden oder Inertgasatmosphäre arbeiten, können sie ohne Verwendung von Schutzrohren direkt durch die den Ofen abdichtende Wand beliebig weit eingeführt werden, sodaß die Temperatur an jeder gewünschten Stelle im Inneren des Ofenraums gemessen werden kann. Der Abstand zwischen der Stelle der Ofendurchführung und der Vergleichsstelle außerhalb des Ofens kann dabei so groß gewählt werden, daß sich letztere nahezu auf Raumtemperatur befindet. Gegebenenfalls kann die Vergleichsstelle auch durch Anbringen von Kühlschlangen am Graphitrohr gemäß der ersten Ausführungsform thermostatisiert werden, wenn beispielsweise aus Platzersparnisgründen ein geringerer Abstand zweckdienlich ist.

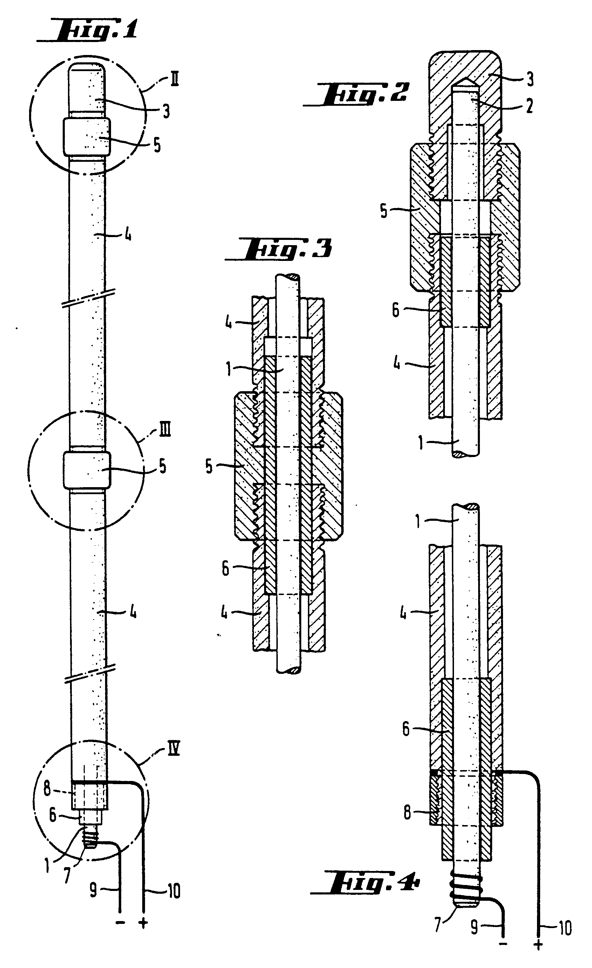

Wenn das Thermoelement aus dem Ofen herausgeführt wird, ist es vorteilhaft, das Thermoelement gemäß der ersten Ausführungsform (Fig.1) innen mit einer stationären Schutzgasfüllung, z.B. Argon, zu versehen, um zu verhindern, daß Umgebungsluft in den Raum zwischen Graphitrohr und Borcarbidstab eindringt. Das kann durch Anbringen eines gasdichten Gehäuses an dem aus dem Ofen herausgeführten Teil des Graphitrohrs bewerkstelligt werden, in dem Öffnungen für die Kupferdrähte und gegebenenfalls vorhandenen Kühlschlangen vorgesehen sind. Durch verschließbare Gaseinlaß- und Auslaßöffnungen kann die Schutzgasfüllung nach längerem Gebrauch erneuert werden, wenn das aufgrund der Leckrate des Graphitrohrs erforderlich ist.

Diese Vorkehrung ist für das Thermoelement gemäß der zweiten Ausführungsform nicht unbedingt erforderlich, da die durchgehende, relativ dichte Bornitrid-Zwischenschicht 6 eine ausreichende Barriere darstellt, durch welche das Eindringen der Umgebungsluft verhindert wird.

In Öfen, die unter Hochvakuum arbeiten, ist die Leckrate über das Graphitrohr zu hoch. In diesem Fall ist es daher zweckmäßig, das ganze Thermoelement mit einem gasdichten Schutzrohr aus refraktärem Metall, z.B. Wolfram oder Molybdän auszurüsten.

In Öfen, die unter Hochdruck arbeiten, beispielsweise Hochdruckautoklaven, die zum isostatischen Heißpressen Verwendung finden, in welchen ein inertes Gas als Druckübertragungsmedium dient, kann das Thermoelement wegen des vorhandenen Drucks nicht durch die den Ofen abdichtende Autoklavenwand geführt werden. Hierbei ist es zweckmäßig, die Vergleichsstelle innerhalb des Ofens möglichst nahe der Autoklavenwand anzubringen. Die Meßstelle kann dabei beliebig weit in das Innere des Ofens bis in die eigentliche Heizkammer geführt werden, die gegenüber der Autoklavenwand thermisch isoliert isu. Die Messung der Vergleichsstellentemperatur kann mit Hilfe eines zweiten Thermoelements aus metallischen Thermopaaren, z.B. NiCr/Ni vorgenommen werden, dessen als Drähte ausgebildete Schenkel aus dem Ofen durch entsprechende Drahtdurchführungen in der Autoklavenwand herausgeführt und außerhalb des Ofens auf Umgebungstemperatur gebracht werden. Durch eine entsprechende Kompensationsschaltung kan die absolute Thermospannung, bezogen auf eine feste Vergleichsstellentemperatur von z.B. 0° C oder 20° C direkt auf ein Meßinstrument übertragen werden.

Der Gegenstand der Erfindung wird durch die folgenden Beispiele näher erläutert:

**Beispiel 1**

a) Herstellung eines Stabes aus polyhristallinem Borcarbid mit Eigenbindung:

Als Ausgangspulver wurden handelsübliche $B_4C$-Körnungen F 360 als Grobkorn (Teilchengröße 12 µm bis 40 µm) und F 1500 als Feinkorn (Teilchengröße 3 µm und feiner) verwendet.

69 Gew.-% des Grobkorns (F 360) wurden mit 30 Gew.-% des Feinkorns (F 1500) unter Zusatz von 1 Gew.-% einer hochviskosen Methylcellulose (Tylose MH 4000) und Wasser in einer Knetvorrichtung bis zur Bildung einer homogenen Masse von pastenähnlicher Konsistenz vermischt. Anschließend wurde die Masse in eine hydraulische Strangpresse gefüllt und mittels eines Mundstücks von 3,5 mm Durchmesser zu Stäben von etwa 1 m Länge geformt, die auf Graphitunterlagen aufgenommen und an der Luft getrocknet wurden. Aschließend wurden die Stäbe auf der Graphitunterlage bei 2.200° C unter Argonspülung in einem Durchschubofen gesintert. Die so hergestellten Stäbe aus polykristallinem Borcarbid mit Eigenbindung waren gut handhabbar und hatten eine Dichte von 1,93 g/cm³, entsprechend 77 % TD des Borcarbids.

b) Aufbau des Thermoelements:

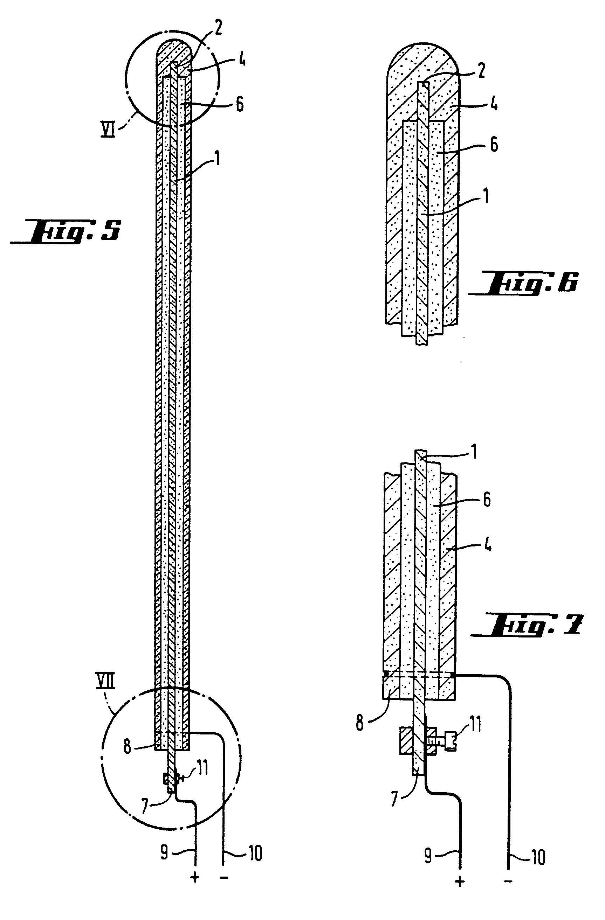

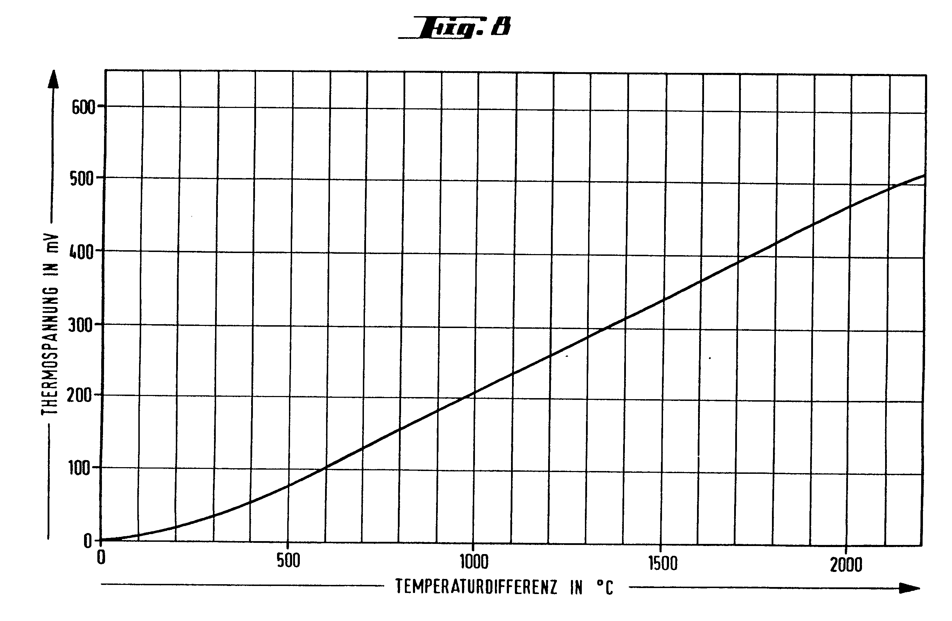

Für den Aufbau eines Thermoelements von 1 m Länge wurde in Übereinstimmung mit den Figuren 1 bis 4 ein nach a) hergestellter $B_4C$-Stab 1 von 1000 mm Länge und einem Durchmesser von 3,3 mm verwendet, der in ein Graphitverbindungsstück 3 fest eingeklemmt wurde.

Als Graphitrohre 4 wurden zwei Rohre aus handelsüblichem Elektrographit (EK 76 der Firma Ringsdorff-Werke GmbH) von jeweils 500 mm Länge, einem Innendurchmesser von 6 mm und einem Außendurchmesser von 10 mm verwendet, die über Graphitmuffen 5 miteinander, bzw. mit 3 verschraubt wurden.

Als Abstandshalter 6 wurden drei vorgefertigte Fülsen aus hochreinem Bornitrid (SBN der Firma ESK) von jeweils 50 mm Länge, einem Innendurchmesser von 3,3 mm und einem Außendurchmesser von 7,2 mm verwendet, die in Aussparungen in den Graphitrohren eingesetzt wurden. Die Vergleichsstelle des Thermoelements wurde durch eine auf dem Graphitrohr angeordnete Kühlschlange thermostatisiert, mit einem gasdichten Gehäuse verschlossen und das Thermoelement mit Argon gefüllt.

Von diesem Thermoelement wurde die Thermospannung in einem widerstandsbeheizten Graphitofen gegen eine konstante Vergleichsstellentemperatur von 20°C gemessen, wobei zum Vergleich ein geeichtes W5Re/W26Re- Thermoelement herangezogen wurde. Die so erhaltene Thermospannungskurve ist in Fig. 8 graphisch dargestellt.

Durch Abdriften des zum Vergleich dienenden Thermoelements und anschließendem Bruch desselben konnte die Kurve nur bis 2.200°C aufgezeichnet werden. Mit dem gleichen $B_4C/C$ Thermoelement konnte die Messung 10 x reproduzierbar wiederholt werden. Anschließend war das Thermoelement unverändert einsatzbereit.

**Beispiel 2**

Herstellung und Aufbau des Thermoelements aus polykristallinem Borcarbid in einem Arbeitsgang:

Als Ausgangspulver wurden die gleichen handelsüblichen $B_4C$-Körnungen (F 360 und F 1500) wie für die Herstellung des Borcarbidstabes gemäß Beispiel 1 a) verwendet.

Als Bornitridpulver wurde ein hochreines, boroxidfreies, hexagonales BN-Pulver mit einer spezifischen Oberfläche von etwa 6 $m^2/g$ (gemessen nach BET) verwendet.

68 Gew.-% des $B_4C$-Grobkorns (F 360) wurden mit 30 Gew.-% des $B_4C$-Feinkorns (F 1500) unter Zusatz von 2 Gew.-% der hochviskosen Methylcellulose (Tylose MH 4000) und Wasser in einer Kentvorrichtung bis zur Bildung der homogenen Masse von pastenähnlicher Konsistenz vermischt.

Das BN-Pulver wurde ebenfalls unter Zusatz von Wasser allein zu einer homogenen Masse von pastenähnlicher Konsistenz verarbeitet.

Als Graphitstab wurde eine handelsübliche, flexible Graphitschnur von 2 mm Dicke (Typ Sigrafil D 2 der Firma Sigri/ Meitingen) verwendet.

Die Graphitschnur wurde in eine Kammer einer Hydraulik-Strangpresse eingelegt und über ein Rohr zur Mitte des runden Mundstückes geleitet.

Um das Rohr und die erste innere Kammer war konzentrisch eine zweite Kammer für die BN-Masse angeordnet mit einem ebenfalls um das innere Rohr konzentrisch angeordneten Hohr als Zuführung zum Mundstück. Das äußere freie Volumen der Strangpresse wurde mit der $B_4C$-Masse gefüllt. Über Hydraulikstempel wurde gleichzeitig die BN- und $B_4C$-Masse aus dem runden Mundstück der Strangpresse gedrückt. Um die bereits etwas aus dem Mundstück herausgezogene Graphitschnur legte sich konzentrisch eine etwa 2 mm dicke BN-Schicht und darauf eine etwa 2 mm dicke $B_4C$-Schicht. Durch die mechanische Verbindung der BN-Schicht mit der Graphitschnur wurde diese entsprechend der Vorschubgeschwindigkeit der herausgedrückten Masse mitgezogen. Der Preßstrang wurde auf Graphitunterlagen aufgenommen und nach etwa 1 m Länge abgeschnitten. Die Graphitschnur wurde an einer Seite des Stranges auf etwa 5 mm freigelegt und mit $B_4C$-Masse umformt, so daß an dieser Stelle ein Kontakt zwischen der Graphitschnur und der $B_4C$-Außenschicht hergestellt wurde. Anschließend wurden die Preßstränge auf den Graphitunterlagen getrocknet und bei 2 250°C unter Argonspülung im Durchschubofen gesintert. Die fertigen Thermoelemente zeigen praktisch die gleichen Thermospannugskurven wie in Figur 8 dargestellt.

Die höhere Sintertemperatur im Vergleich zu Beispiel 1 a) bewirkte eine geringe Schwindung der $B_4C$-Schicht von 3 - 4 %. Hierzu trug auch der etwas erhöhte Anteil an freiem Kohlenstoff durch die Zersetzung der eingebrachten feinverteilten Tylose bei. Durch diese Schwindung in Richtung auf die Graphitschnur ergab sich ein guter kontakt an der Verbindungsstelle von Schnur und $B_4C$-Schicht. Die Bornitridschicht und die Graphitschnur zeigten abgesehen von dem leichten Zusammenpressen durch die Schwindung der äußeren $B_4C$-Schicht keine Eigenschwindung.

**Patentansprüche**

1. Thermoelement bestehend aus dem Thermopaer Graphit/Borcarbid, dessen Schenkel als Rohr und als innerhalb dieses Rohres konzentrisch angeordneter Stab ausgebildet und an einem Ende leitend verbunden sind, dadurch gekennzeichnet, daß als Werkstoff für einen der Thermopaarschenkel polykristallines Borcarbid mit Eigenbindung, das durch druckloses Sintern hergestellt worden ist, verwendet wird.

2. Thermoelement nach Anspruch 1, dadurch gekennzeichnet, daß zwischen den Thermopaarschenkeln vorgefertigte Hülsen aus hochreinem, boroxidfreiem, hexagonalem Bornitrid als Abstandshalter verwendet werden.

3. Thermoelement nach Anspruch 1, dadurch gekennzeichnet, daß der als Stab ausgebildete Thermopaarschenkel nur am Stabende in einem elektrisch leitenden Verbindungsstück befestigt und in Richtung auf die Vergleichsstelle frei beweglich ist.

4. Thermoelement nach Anspruch 1, dadurch gekennzeichnet, daß als Werkstoff für den als Stab ausgebildeten Thermopaarschenkel Borcarbid mit grobkörnigem Gefüge und einer Dichte von 60 bis 80 % der theoretischen Dichte von reinem Borcarbid, das aus Borcarbidpulver mit bimodaler Kornverteilung durch Strangpressen und anschließendem drucklosen Sintern bei 2.000o bis 2.250° C hergestellt worden ist, verwendet wird.

5. Thermoelement nach Anspruch 1, dadurch gekennzeichnet, daß es aus Stab, Abstandshalter und Rohr besteht, das in einem Arbeitsgang durch drucklose Sinterung des Borcarbidpulvers in situ hergestellt worden ist.

6. Thermoelement nach Anspruch 5, dadurch gekennzeichnet, daß als Ausgangsmaterial für den Abstandshalter hochreines, boroxidfreies, hexagonales Bornitridpulver verwendet, das gemeinsam mit dem Borcarbidpulver in situ drucklos gesintert worden ist.

7. Thermoelement nach Anspruch 5, dadurch gekennzeichnet, daß es aus einer flexiblen Graphitschnur für den als Stab ausgebildeten Thermopaarschenkel, einer Hülle aus Bornitrid und einem Mantel aus Borcarbid mit grobkörnigem Gefüge und einer Dichte von 60 bis 80 % der theoretischen Dichte von reinem Borcarbid, der an einem Ende mit der Graphitschnur leitend verbunden ist, besteht, wobei Hülle und Mantel gemeinsam in situ drucklos gesintert worden sind.

8. Verfahren zur Herstellung des Thermoelements nach Anspruch 7, dadurch gekennzeichnet, daß auf eine flexible Graphitschnur konzentrisch eine Bornitridpulverschicht und darauf eine Borcarbidpulverschicht mit bimodaler Kornverteilung durch Strangpressen aufgebracht, die Graphitschnur an einem Ende direkt mit dem Borcarbidpulver in Berührung gebracht und diese, Anordnung anschliessend drucklos auf 2 000° bis 2 250° C erhitzt wird bis zur Bildung der Hülle aus Bornitrid und des Mantels aus Borcarbid durch Sinterung.

## Claims

1. Thermoelement comprising a graphite/boron carbide thermocouple, the arms of which are constructed as a tube and as a rod arranged concentrically inside the tube and are electrically connected at one end
characterised in that
polycrystalline boron carbide being self-bonded, whichhas been manufactured by means of pressureless sintering, is used as the material for one of the arms of the thermocouple.

2. Thermoelement according to claim 1, characterised in that

prefabricated sleeves of high-purity, boron-oxide-free hexagonal boron nitride are used as spacers between the arms of the thermocouple.

3. Thermoelement according to claim 1, characterised in that
only the end of the arm of the thermocouple constructed as a rod is secured in an electrically conductive connecting piece and the arm is freely mobile in the direction towards the cold junction.

4. Thermoelement according to claim 1, characterised in that
boron carbide having a coarse-grained structure and a density of from 60 to 80% of the theoretical density of pure boron carbide, which has been manufactured from boron carbide powder having bimodal particle distribution by means of extrusion followed by pressureless sintering at from 2000 to 2250° C, is used as the material for the arm of the thermocouple constructed as a rod.

5. Thermoelement according to claim 1, characterised in that
it comprises a rod, a spacer and a tube, which have been manufactured in one operation by means of the pressureless sintering of boron carbide powder in situ.

6. Thermoelement according to claim 5, characterised in that
high-purity, boron-oxide-free hexagonal, boron nitride powder which has been sintered together with the boron carbide powder without pressure in situ is used as the starting material for the spacer.

7. Thermoelement according to claim 5, characterised in that
it comprises a flexible graphite cord for the arm of the thermocouple constructed as a rod, a boron nitride envelope and a casing of boron carbide having a coarse-grained structure and a density of from 60 to 80% of the theoretical density of pure boron carbide, one end of which is electrically connected to the graphited cord, the envelope and the casing having been sintered together in situ without pressure.

8. Process for the manufacture of the thermoelement according to claim 7, characterised in that
a layer of boron nitride powder, followed by a layer of boron carbide powder having bimodal particle distribution is applied concentrically to the flexible graphite cord by means of extrusion, one end of the graphite cord is brought directly into contact with the boron carbide powder and this arrangement is then heated without pressure to from 2000 to 2250° C until the boron nitride envelope and the boron carbide casing having been formed by sintering.

## Revendications

1. Thermoélément consistant en le thermocouple graphite/carbure de bore, dont les

**0 104 336**

branches sont réalisées sous forme d'un tube et d'une tige disposée concentriquement à intérieur de ce tube et sont reliées de manière conductrice par une extrémité, caractérisé en ce qu'on utilise comme matériau pour une branche de thermocouple du carbure de bore polycristallin à liaison propre, que l'on a produit par frittage sans compression.

2. Thermoélément selon la revendication 1, caractérisé en ce qu'on utilise comme entretoises entre les branches du thermocouple des manchons préfabriqués en du nitrure bore hexagonal de haute pureté, sans oxyde de bore.

3. Thermoélément selon la revendication 1, caractérisé en ce que la branche en forme de tige n'est fixée que par une extrémité dans un élément de liaison électriquement conducteur et peut librement se déplacer dans la direction de la zone de comparaison.

4. Thermoélément selon la revendication 1, caractérisé en ce qu'on utilise, comme matériau pour la branche de thermocouple en forme de tige, du carbure de bore ayant une structure en grains grossiers et une masse volumique représentant 60 à 80 % de la masse volumique théorique du carbure de bore pur, tige que l'on a produite à partir d'une poudre de carbure de bore ayant une répartition bimodale des grosseurs de grains par extrusion puis frittage sans compression à 2000° jusqu'à 2250° C.

5. Thermoélément selon la revendication 1, caractérisé en ce qu'il consiste en une tige, des entretoises et un tube que l'on produit in situ en une seule suite d'opérations par frittage sans compression de la poudre de carbure bore.

6. Thermoélément selon la revendication 5, caractérisé en ce qu'on utilise comme matériau de départ pour les entretoises de la poudre de nitrure de bore hexagonal de haute pureté, sans oxyde de bore, que l'on fritte in situ sans compression avec la poudre de carbure de bore.

7. Thermoélément selon la revendication 5, caractérisé en ce qu'il consiste en un fil souple en graphite pour la branche du thermocouple en forme de tige, une gaine en nitrure de bore et une enveloppe en carbure de bore à structure de grains grossiers et ayant une masse volumique représentant 60 à 80 % de la masse volumique théorique du carbure de bore pur, qui est relié de manière conductrice par une extrémité avec le fil souple en graphite, la gaine et l'enveloppe étant frittées ensemble in situ sans compression.

8. Procédé pour préparer le thermoélément selon la revendication 7, caractérisé en ce qu'on applique par extrusion sur un fil souple en graphite, concentriquement, une couche de poudre de nitrure de bore et, par-dessus, une couche de poudre de carbure de bore à répartition bimodale des grosseurs de grains, on met directement en contact le fil souple en graphite, à une extrémité, avec la poudre de carbure de bore et l'on chauffe ensuite cet ensemble sans le comprimer à 2000° jusqu'à 2250° C jusqu'à formation de la gaine en nitrure de bore et de l'enveloppe en carbure de bore, par frittage.

Fig.1

Fig.2

Fig.3

Fig.4

_Fig. 5_

_Fig. 6_

_Fig. 7_

# Fig. 8

TEMPERATURDIFFERENZ IN °C

THERMOSPANNUNG IN mV

600    500    400    300    200    100    0

0    500    1000    1500    2000